# FASCICULE DE BREVET EUROPEEN

(11) **EP 2 915 336 B1**
(45) Date de publication et mention de la délivrance du brevet: **28.03.2018**
(21) Numéro de dépôt: 13774208.6
(22) Date de dépôt: 10.10.2013
(51) Int. Cl.: H04N 21/4627, H04N 21/4623, H04N 21/443, H04N 21/81, G06F 9/455

(54) **DISPOSITIF DE TRAITEMENT DE CONTENUS MULTIMÉDIA METTANT EN OEUVRE UNE PLURALITÉ DE MACHINES VIRTUELLES**
VORRICHTUNG ZUR VERARBEITUNG VON MULTIMEDIAINHALTEN MIT EINER VIELZAHL VIRTUELLER MASCHINEN
DEVICE FOR PROCESSING MULTIMEDIA CONTENTS IMPLEMENTING A PLURALITY OF VIRTUAL MACHINES

(30) Priorité: 05.11.2012 FR 1260478
(43) Date de publication de la demande: 09.09.2015
(73) Titulaire: Viaccess, 92057 Paris La Défense (FR)
(72) Inventeur: SANCHEZ-LEIGHTON, Vicente, F-35000 Rennes (FR)
(74) Mandataire: Lavoix
(86) Numéro de dépôt international: PCT/EP2013/071194
(87) Numéro de publication internationale: WO 2014/067760

(56) Documents cités:
- EP-A1- 2 400 739
- EP-A1- 2 515 231
- WO-A1-2006/027488
- US-A1- 2006 136 720
- US-A1- 2010 263 059
- US-A1- 2011 246 785
- US-A1- 2011 317 831
- Albert Chiang: "Securing the Future", , 30 novembre 2006 (2006-11-30), XP055063981, Extrait de l'Internet: URL:http://www.mips.com/media/files/white- papers/SecuringTheFuture.pdf [extrait le 2013-05-24]

## Description

La présente invention concerne un dispositif de traitement de contenus multimédia, apte à recevoir des contenus multimédia chiffrés, protégés par un système de protection de contenus, et à fournir lesdits contenus multimédia sous forme déchiffrée à un dispositif utilisateur.

Plus généralement, l'invention se situe dans le domaine de la distribution protégée de contenus multimédia fournis par un fournisseur de contenus et des dispositifs de traitement et de visualisation de tels contenus, par exemple les dispositifs de télévision numérique enrichie ou « smart TVs » en terminologie anglo-saxonne.

De tels dispositifs de télévision numérique enrichie comprennent classiquement des moyens de restitution visuelle et sonore des contenus multimédia, typiquement un téléviseur, ainsi qu'un décodeur, soit intégré avec les moyens de restitution, soit sous forme d'un boîtier séparé connecté aux moyens de restitution. Un tel décodeur comprend des moyens de réception de contenus multimédia protégés, par exemple chiffrés à l'aide d'un mot de contrôle, des moyens de mise en oeuvre de contrôle d'accès, et des moyens de déchiffrement des contenus multimédia reçus en cas de validation des conditions d'accès, des moyens de décodage et de restitution des contenus multimédia reçus.

De plus, les dispositifs de télévision numérique enrichie récents présentent également des moyens de connexion à Internet et permettent à l'utilisateur de télécharger et d'accéder à des services applicatifs tiers (par exemple des jeux, des services bancaires), qui proviennent de serveurs tiers qui sont totalement indépendants du fournisseur de contenus multimédia ou de l'opérateur, qui est par exemple un fournisseur de services de télécommunications, fournisseur du dispositif de télévision numérique enrichie, qui est un intermédiaire entre le fournisseur de contenu et l'utilisateur.

Actuellement, d'un point de vue architecture logicielle, l'ensemble des services applicatifs et des services relatifs aux contenus multimédia sont organisés dans une même pile logicielle, structurée au-dessus d'un seul système d'exploitation. Une telle architecture logicielle induit potentiellement des problèmes de sécurité des contenus multimédia et des données relatives aux services applicatifs tiers. En effet, l'intégration de nombreux services, issus de sources hétérogènes, dans une même pile logicielle, augmente la probabilité d'erreurs et de faiblesses logicielles, qui sont à la base des attaques et des piratages. En particulier, il est connu que plus un logiciel est volumineux, plus la probabilité d'erreurs augmente.

Or dans le domaine de la distribution des contenus multimédia protégés, il est crucial de préserver les droits des fournisseurs de contenu, d'éviter la récupération de contenus déchiffrés et leur restitution ou leur distribution en dehors de ces droits. Les services relatifs aux contenus multimédia et les contenus multimédia eux-mêmes doivent donc être protégés.

Par ailleurs, certaines données relatives aux services applicatifs tiers doivent également être protégées, qu'il s'agisse par exemple de données bancaires ou de données confidentielles dans d'autres domaines, que l'utilisateur ne souhaite pas diffuser sans autorisation de sa part.

Ainsi, des dispositifs de télévision numérique enrichie permettant à la fois l'accès à des contenus multimédia protégés et l'accès à des services applicatifs provenant de serveurs tiers divers présentent de fortes exigences de sécurité, qui ne sont pas satisfaites par les dispositifs à architecture logicielle à pile logicielle unique.

Le document US2010/263059 A1 décrit un dispositif de traitement de contenus multimédia, de type set-top box, comportant des modules d'accès à des services personnalisés.

Le document US2006/0136720 A1 décrit un système de sécurité informatique à plusieurs machines virtuelles.

L'invention a pour objet de remédier à ce défaut de sécurité des dispositifs de télévision numérique enrichie de l'état de la technique. A cet effet, l'invention propose un dispositif de traitement de contenus multimédia conforme à la revendication 1.

Avantageusement, la séparation en trois groupes de machines virtuelles contrôlées par un hyperviseur, avec un groupe de machines virtuelles destiné à mettre en oeuvre tous les services de sécurité ayant un premier niveau de sécurité associé permet d'assurer une bien meilleure sécurité et robustesse aux éventuelles attaques que l'architecture logicielle à une seule pile logicielle. En effet, les groupes de machines virtuelles ainsi mis en place sont exécutés de manière strictement séparée, et au-dessus d'un hyperviseur particulièrement compact, ce qui limite nettement, par construction, les risques d'attaques.

De plus, avantageusement, le groupe de machines virtuelles destiné à mettre en oeuvre tous les services de sécurité assure un rôle de tiers de confiance.

Le dispositif de traitement de contenus multimédia selon l'invention peut présenter une ou plusieurs des caractéristiques ci-dessous :
- le troisième groupe comporte au moins une machine virtuelle exécutant un service de déchiffrement multimédia ;
- il comporte en outre des moyens de stockage de données relatives aux services mis en oeuvre;
- il comporte des moyens d'accès à un réseau de communications, et lesdits services applicatifs tiers sont téléchargés par l'utilisateur via ledit réseau de communications ;
- ledit troisième groupe comporte une machine virtuelle exécutant un service tiers de confiance, apte à communiquer avec un service mis en oeuvre par une machine virtuelle du premier groupe ou avec un service mis en oeuvre par une machine virtuelle du deuxième groupe via des canaux sécurisés ;
- les machines virtuelles dudit troisième groupe ont des privilèges d'exécution attribués par ledit hyperviseur supérieurs aux privilèges d'exécution attribués respectivement aux machines virtuelles desdits premier groupe et deuxième groupe ;
- chaque machine virtuelle dudit premier groupe exécute un service applicatif tiers ou un agrégat de services applicatifs tiers ;
- il comporte un nombre prédéterminé de processeurs physiques et ledit hyperviseur est apte à contrôler lesdits processeurs physiques.

D'autres caractéristiques et avantages de l'invention ressortiront de la description qui en est donnée ci-dessous, à titre indicatif et nullement limitatif, en référence aux figures annexées, parmi lesquelles :
- la figure 1 représente un système de fourniture de contenus multimédia chiffrés comprenant un dispositif de traitement de contenus multimédia selon l'invention ;
- la figure 2 illustre schématiquement un mode de réalisation de l'architecture logicielle proposée, et
- la figure 3 représente schématiquement un hyperviseur dans un mode de réalisation de l'invention.

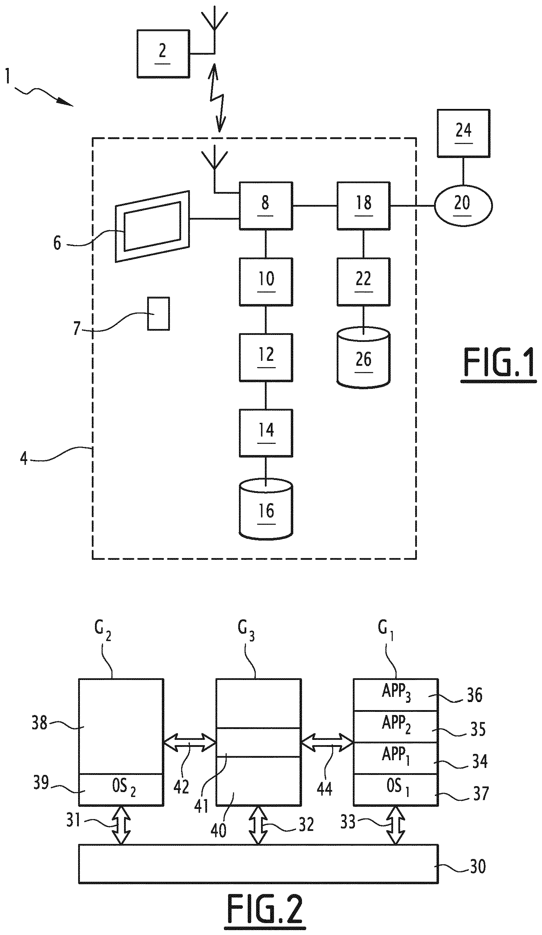

Le système 1 de fourniture de contenus multimédia chiffrés de la figure 1 comprend un transmetteur 2, géré par exemple par un fournisseur de contenus ou par un ou plusieurs opérateur(s), qui est adapté à diffuser des contenus multimédia chiffrés à l'aide d'un mot de contrôle à un ensemble de récepteurs. Pour simplifier, un seul tel récepteur 4 est illustré à la figure 1.

Dans le mode de réalisation illustré à la figure 1, le transmetteur 2 est muni d'une antenne de transmission. Le transmetteur transmet, en plus des contenus multimédia chiffrés, des messages de contrôle des titres d'accès, ou ECM (pour « Entitlement Control Messages » en anglais) comprenant un mot de contrôle adapté à déchiffrer les contenus multimédia chiffrés et des messages de gestion des titres d'accès, ou EMM (pour « Entitlement Management Messages » en anglais).

Le récepteur 4 est typiquement un dispositif de traitement de contenus multimédia selon l'invention, comme par exemple un dispositif de télévision numérique enrichie.

Le dispositif de traitement de contenus multimédia 4 comporte des moyens de restitution des contenus multimédia 6, typiquement un écran combiné à des moyens de restitution sonore, des moyens de commande classiques 7, par exemple une télécommande, permettant à un utilisateur de commander diverses fonctionnalités offertes par le dispositif 4, d'une part des fonctionnalités liées aux contenus multimédia (par exemple lecture, changement de source, pause, retour en arrière), et d'autre part, des fonctionnalités liées à l'installation et à l'utilisation d'autres services applicatifs tiers. Le dispositif 4 comporte également un décodeur 8 muni d'une antenne de réception, apte à recevoir des contenus multimédia chiffrés, à les décoder après leur déchiffrement et à les fournir ensuite aux moyens de restitution 6 qui forment, avec les moyens de commande 7, un dispositif utilisateur dans cet exemple de réalisation.

Le dispositif de traitement de contenus multimédia 4 comporte également des moyens 10 de contrôle des titres d'accès aux contenus chiffrés, mettant en oeuvre de manière connue, les messages ECM et EMM reçus et leur traitement en fonction d'une souscription de l'utilisateur du dispositif 4. Dans un mode de réalisation, les moyens de contrôle 10 mettent en oeuvre un système d'accès conditionnel tel que décrit dans « Functional Model of a Conditional Access System », EBU Review, Technical European Broadcasting Union, Bruxels, BE, N° 266, le 21 décembre 1995.

Ce dispositif 4 comporte également des moyens de déchiffrement 12 des contenus multimédia reçus et de moyens de décryptage 14 des mots de contrôle cryptés reçus via les messages de contrôle des titres d'accès ECM.

Les moyens de déchiffrement 12 et de décryptage 14 sont des moyens aptes à exécuter des services de sécurité, ayant un premier niveau de sécurité, qui est le niveau de sécurité le plus élevé considéré. En particulier, cela signifie qu'il est important de rendre les services de sécurité mis en oeuvre par ces moyens très difficiles à pirater par tout type d'attaques.

Divers paramètres nécessaires pour la mise en oeuvre des services de sécurité sont stockés dans une mémoire 16 associée.

Les moyens de décryptage 14 et de déchiffrement 12 sont mis en oeuvre pour fournir des contenus multimédia déchiffrés à partir des contenus multimédia reçus, ces contenus multimédia déchiffrés étant fournis ensuite au décodeur 8 apte à les décoder en temps réel pour fournir des contenus multimédia décodés, adaptés à être restitués sur les moyens de restitution 6.

Le dispositif de traitement de contenus multimédia 4 comporte en outre des moyens de connexion 18 à un réseau de communications 20, qui est par exemple le réseau Internet.

De plus, des moyens 22 d'exécution de services applicatifs sont également présents, ces services applicatifs ayant un niveau de sécurité associé inférieur au premier niveau de sécurité, donc nécessitant une sécurité moindre.

Par exemple, des services applicatifs tiers de niveau de sécurité inférieur au premier niveau de sécurité sont typiquement des applications logicielles fournies par des serveurs tiers, et téléchargées et installées par un utilisateur du dispositif de traitement de contenus multimédia 4. Un serveur tiers 24 est typiquement totalement indépendant du fournisseur ou opérateur qui est en charge du transmetteur 2.

Par exemple, un service applicatif tiers peut être une application bancaire permettant à l'utilisateur de consulter ses données bancaires. Un autre service applicatif tiers est par exemple une application de jeu compatible avec les moyens de restitution 6 et les moyens de commande 7 disponibles.

Des moyens de stockage 26 des paramètres et données relatifs aux services applicatifs tiers sont également présents.

Dans un mode de réalisation alternatif, le dispositif de traitement 4 mettant en oeuvre l'invention est implémenté sous la forme d'un boîtier de connexion de type set-top box, apte à transmettre des contenus multimédia déchiffrés à un dispositif utilisateur ayant des moyens de restitution des contenus multimédia, comme un téléviseur. La figure 2 illustre l'architecture logicielle permettant d'implémenter les divers moyens mis en oeuvre décrits en référence à la figure 1 selon un mode de réalisation de l'invention.

Dans ce mode de réalisation, l'ensemble des services mis en oeuvre par le dispositif de traitement de contenus multimédia 4 est partagé en trois groupes de machines virtuelles, notés respectivement G1, G2 et G3, qui sont contrôlés par un hyperviseur ou VMM (pour « Virtual Machine Monitor » en anglais), noté 30 sur la figure 2.

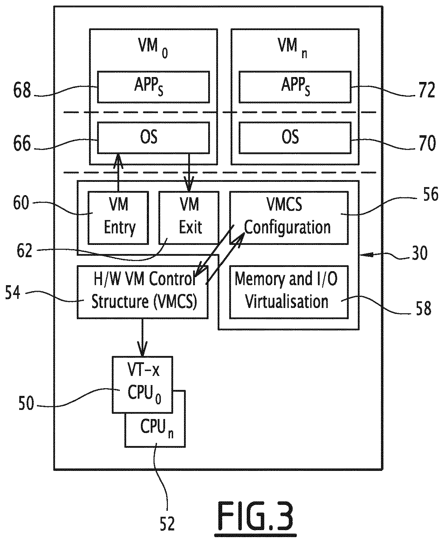

Un hyperviseur est un mécanisme logiciel connu permettant de créer, sur un support matériel composé d'un ou plusieurs processeurs, un nombre quelconque de processeurs virtuels isolés et indépendants, et de partitionner également la mémoire (RAM, SRAM, etc.). Un hyperviseur sera décrit plus en détail ci-après en référence à la figure 3.

L'hyperviseur 30 contrôle les groupes de machines virtuelles G1, G2 et G3 via des instructions 31, 32, 33 attribuant des privilèges d'exécution à chaque machine virtuelle et à chaque groupe de machines virtuelles. Les différentes machines virtuelles sont exécutées de manière strictement séparée même si elles appartiennent à un même groupe.

Le premier groupe de machines virtuelles G1 met en oeuvre les moyens d'exécution 22 des services applicatifs tiers, provenant de serveurs tiers qui sont contrôlés par des fournisseurs d'applications indépendants du ou des opérateurs fournisseurs de contenus multimédia. Les serveurs tiers sont accessibles via le réseau de communications 20, et les services applicatifs tiers sont téléchargés et installés par l'utilisateur.

Chaque machine virtuelle de ce premier groupe exécute une pile logicielle correspondant à un ensemble de services applicatifs tiers donné, respectivement notés APP₁, APP₂ et APP₃ sur la figure. Dans l'exemple illustré sur la figure 2, une seule machine virtuelle est représentée dans le groupe G1, sa pile logicielle est constituée de plusieurs applicatifs tiers : 34 associé au service APP₁, 35 au service APP₂ et 36 au service APP₃.

En variante, il est envisagé d'agréger des services applicatifs similaires, ayant des fonctionnalités très proches et imbriquées, pour des raisons de performance, en une seule pile logicielle, exécutée par une machine virtuelle. Dans ce cas, une machine virtuelle du premier groupe exécute un agrégat de services applicatifs tiers.

Par ailleurs, un mode d'exécution du processeur virtuel du groupe de machines virtuelles G1 37 spécifique, ayant un niveau de privilège d'exécution élevé, est dédié à la mise en oeuvre d'un système d'exploitation OS1, par exemple l'ensemble Linux complété de l'ensemble de librairies nécessaires à l'exécution de APP1, APP2, APP3, communément appelé runtime.

Le deuxième groupe de machines virtuelles G2 est dédié aux applications ou services applicatifs 38 contrôlés par l'opérateur ou un des opérateurs qui sont en charge du transmetteur 2 de contenus multimédia chiffrés, mais qui ont un niveau de sécurité associé inférieur au premier niveau de sécurité. Les services fournis par l'opérateur sont supportés par un système d'exploitation OS2, mis en oeuvre par un mode privilégié 39 du processeur virtuel.

Le système d'exploitation OS2 peut être différent du système d'exploitation OS1, permettant ainsi de faire cohabiter des environnements d'exécution hétérogènes.

On peut considérer que le niveau de sécurité de ces services fournis par le ou les opérateurs est différent du niveau de sécurité associé aux services applicatifs tiers installés par l'utilisateur, mais il est inférieur néanmoins au niveau de sécurité à la fois du groupe G3 de gestion de la sécurité et à celui, maximal, de l'hyperviseur.

Par exemple, ces services fournis par les opérateurs incluent l'offre payante de contenus multimédia, l'offre de re-visionnage de contenu (« replay » en anglais), la recommandation de contenus, les contenus non-payants, etc.

Dans un mode de réalisation, les services fournis par un opérateur sont installés à l'avance sur le dispositif de traitement de contenus multimédia 4, lors de la mise à la disposition de l'utilisateur de ce dispositif. Une mise à jour des services fournis par l'opérateur peut être également envisagée. Dans ce cas, il est prévu d'authentifier l'opérateur, via un protocole d'authentification, par l'hyperviseur 30, de manière à ce qu'un service applicatif transmis par l'opérateur soit installé par l'hyperviseur 30 pour une exécution par une machine virtuelle du deuxième groupe de machines virtuelles G2.

Tous les services fournis par l'opérateur et nécessitant un niveau de sécurité élevé égal au premier niveau de sécurité, dits services de sécurité, en particulier les services mis en oeuvre par le moyens de contrôle d'accès 10, de déchiffrement 12 et de décryptage 14, sont exécutés chacun par une machine virtuelle du troisième groupe de machines virtuelles G3 ou par un processus d'une de ses machines virtuelles. En particulier, une machine virtuelle du groupe G3 fournit un service de décryptage à un service de contrôle d'accès, permettant de vérifier les droits d'accès de l'utilisateur au contenu multimédia.

Le groupe de machines virtuelles noté G3, ou groupe de sécurité, exécute par ailleurs d'autres services de premier niveau de sécurité, comme par exemple l'affichage sécurisé, le stockage sécurisé, l'accès réseau sécurisé, la saisie de mots de passe et/ou de logins, etc.

Une machine virtuelle de ce groupe de machines virtuelles G3 implémente un service de surveillance 40 ou monitoring de sécurité, qui lui permet de vérifier la conformité de l'exécution des services mis en oeuvre respectivement par les autres groupes de machines virtuelles et d'arrêter/redémarrer (« reboot ») les machines virtuelles concernées si nécessaire. Dès que le comportement d'une des machines virtuelles des groupes G1 et G2 s'écarte, ou semble s'écarter, des pré-requis de sécurité déclarés par chacun de ces groupes, le service de surveillance de sécurité 40, pourra prendre, si le contrat d'exécution d'un des groupes G1 ou G2 l'exige, la décision d'arrêter et relancer l'une ou l'ensemble des machines virtuelles du groupe, si leur comportement sort du cadre prédéfini, à la manière des anti-malwares ou antivirus.

Le groupe de machines virtuelles G3 implémente également un service 'tiers de confiance' 41, garantissant le partage équitable des ressources matérielles disponibles : mémoires 16, 26, connexions réseau 18, temps d'exécution et utilisation des processeurs physiques présents, en particulier des processeurs spécialisés type GPU.

Les machines virtuelles des autres groupes de machines virtuelles seront connectées à ce service 'tiers de confiance' 41 via des canaux sécurisés 42, 44, leur permettant de dialoguer avec le service 'tiers de confiance' 41 selon un protocole spécifique. Un canal de communication sécurisé est un canal dont l'utilisation ne peut pas mettre en danger directement le fonctionnement des machines virtuelles l'utilisant. Même si l'une des machines virtuelles utilisant ce canal sécurisé est compromise, est la proie d'attaquants, le fait d'utiliser ce canal ne pourra pas directement provoquer une dégradation de la sécurité de l'autre machine virtuelle utilisant le canal. De tels canaux sécurisés sont connus de l'homme du métier : ils sont construits principalement sur des ressources (processeur, mémoire, bus) allouées statiquement et de façon strictement limitée. Bien entendu aucun canal sécurisé ne pourra arrêter des attaques par canaux et déductions indirects, mais ils pourront ralentir la propagation de la menace et donner le temps pour une riposte de la part du groupe de sécurité G3.

Ainsi, le service 'tiers de confiance' 41 garantit, selon des spécifications préétablies, le contrat de sécurité de chaque groupe de machines, la protection et l'intégrité de certaines données des groupes G1 et G2 et l'étanchéité relative des attaques ou défauts.

La figure 3 représente de manière schématique une mise en oeuvre dans le cadre de l'architecture de processeurs Intel® d'un hyperviseur 30 contrôlant deux machines virtuelles notées respectivement VM₀ et VMₙ.

L'hyperviseur 30 est développé sous forme de programme logiciel, sur un support matériel offert par un nombre n donné de processeurs physiques adaptés. Deux tels processeurs notés 50, 52 sont illustrés sur la figure. L'ensemble de processeurs physiques comporte un gestionnaire de mémoire virtuelle appelé MMU (pour « Memory Management Unit » en anglais).

L'hyperviseur 30 s'exécute dès l'initialisation et contrôle l'ensemble des ressources matérielles afin de remplacer l'exploitation des n processeurs physiques natifs par celle d'un ensemble de processeurs virtuels ou machines virtuelles.

De manière classique, la virtualisation de processeur comprend la modification des codes sources des systèmes d'exploitation des processeurs physiques de telle façon que les instructions privilégiées soient remplacées par des services équivalents fournis par l'hyperviseur. Les autres instructions sont quant à elles exécutées directement par les processeurs réels. Dans le cadre de l'architecture Intel® représentée par la figure 3, cette modification des sources n'est pas nécessaire car les processeurs de cette architecture disposant de la technologie VT-x simulent de façon matérielle le contexte complet d'un processeur virtuel avec une compatibilité totale.

Cette fonctionnalité est réalisée par un module 54 qui effectue le contrôle des processeurs physiques, en collaboration avec un logiciel de contrôle et de configuration 56.

L'hyperviseur 30 comprend également un module 58 de virtualisation de la mémoire, des espaces d'adressage mémoire et des entrées-sorties.

L'hyperviseur s'exécute dans le mode le plus privilégié des processeurs physiques, les systèmes d'exploitation virtualisés dans un mode moins privilégié que celui de l'hyperviseur et les applications et services gérés par les systèmes d'exploitation virtualisés dans un mode encore moins privilégié s'il est disponible, sinon dans le même que le système d'exploitation virtualisé, comme illustré par l'étagement de la figure 3.

Dans ce cas deux modules notés respectivement 60 et 62 assurent l'ordonnancement des machines virtuelles mises en oeuvre.

Plusieurs mises en oeuvre d'un hyperviseur permettant de créer plusieurs machines virtuelles et de gérer la séparation des espaces mémoires sont connues dans l'état de la technique. On pourra se reporter par exemple au document WO2006027488 qui décrit une mise en oeuvre avantageuse d'un programme hyperviseur.

Le document WO2006027488 décrit notamment la gestion par l'hyperviseur des privilèges d'exécution des machines virtuelles.

De préférence, et pour en obtenir les résultats sécuritaires escomptés, le code binaire comprenant les instructions permettant la mise en oeuvre du programme hyperviseur est très compact, par exemple de l'ordre de quelques dizaines de kilo Octets, de manière à limiter statistiquement la quantité d'erreurs ou bugs.

De préférence, et pour les mêmes raisons sécuritaires, l'exécution de l'hyperviseur est atomique, donc ne peut être interrompue, et tout appel à l'hyperviseur est donc limité à quelques centaines d'instructions binaires, pour ne pas gêner la fluidité de l'ensemble.

Dans chaque machine virtuelle, un système d'exploitation respectif est supervisé par les modules de contrôle de l'hyperviseur, le système d'exploitation contrôlant l'exécution des applications qui ont des niveaux de privilège moindres en mode non virtualisé.

Par exemple, dans l'illustration de la figure 3, l'hyperviseur supervise le module 66 de la machine virtuelle VM₀ mettant en oeuvre un système d'exploitation OS ayant un niveau de privilège supérieur au niveau de privilège des applications APPs mises en oeuvre dans le module référencé 68, au-dessus du système d'exploitation OS. Il en est de même pour le système d'exploitation 70 mis en oeuvre par la machine virtuelle VMₙ, qui a un niveau de privilège supérieur au niveau de privilège des applications APPS du module 72.

Selon un mode de réalisation particulier, l'hyperviseur est apte à donner un niveau de privilège particulier à une des machines virtuelles, donc à permettre à une des machines virtuelles de disposer de droits étendus par rapport aux autres machines virtuelles.

Cette fonctionnalité est avantageusement utilisée pour la mise en oeuvre des machines virtuelles du troisième groupe de machines virtuelles de sécurité noté G3 à la figure 2, permettant ainsi notamment la mise en oeuvre des services de surveillance de sécurité 40 et de tiers de confiance 41, le groupe G3 étant ainsi apte à arbitrer et à contrôler la mise en oeuvre de services applicatifs exécutés par l'une ou l'autre des autres machines virtuelles.

De préférence, les services de sécurité du groupe de machines virtuelles de sécurité sont statiques et préinstallés afin d'augmenter la sécurité et la robustesse aux éventuelles attaques. Ces services de sécurité sont néanmoins redémarrables ou rebootables.

La communication entre les diverses machines virtuelles se fait par des canaux de communication sécurisés, comme déjà décrit ci-dessus.

L'invention a été décrite ci-dessus dans un mode de réalisation dans lequel les contenus multimédia sont protégés par un système de contrôle d'accès à base de messages de contrôle et de gestion de titres d'accès. En variante, les contenus multimédia sont protégés par un système de gestion des droits DRM (pour « Digital Rights Management ») dans lequel les droits associés aux contenus multimédia sont gérés via des licences.

Avantageusement, en plus du partitionnement propre à chaque machine virtuelle, et à chaque groupe de machines virtuelles communicantes de même niveau de sécurité, le groupe de machines virtuelles destiné à mettre en oeuvre les services de sécurité, exerce de plus un partitionnement actif : en gérant de manière stricte, équilibrée et préventive, les librairies logicielles et périphériques partagés entre les autres groupes de machines virtuelles (le groupe opérateur, le groupe d'applications tierces). Le groupe de machines virtuelles tiers de confiance respecte à la fois les besoins sécuritaires des services opérateur et des applications tierces.

## Revendications

1. Dispositif de traitement de contenus multimédia, apte à recevoir des contenus multimédia chiffrés en provenance d'au moins un transmetteur géré par un opérateur, protégés par un système de protection de contenus, et à fournir lesdits contenus multimédia sous forme déchiffrée à un dispositif utilisateur, comprenant des moyens (10) de mise en oeuvre de contrôle d'accès autorisant la fourniture desdits contenus multimédia déchiffrés audit dispositif utilisateur, des moyens (10, 12, 14) d'exécution de services de sécurité ayant un premier niveau de sécurité associé, et des moyens (22) d'exécution de services ayant un niveau de sécurité associé inférieur audit premier niveau de sécurité, **caractérisé en ce qu'**il comprend :
- un hyperviseur (30) apte à contrôler l'exécution d'au moins trois groupes de machines virtuelles (G1, G2, G3), lesdits groupes de machines virtuelles étant exécutés de manière strictement séparée, parmi lesquels :
- un premier groupe (G1) de machines virtuelles dédié à l'exécution de services applicatifs tiers de niveau de sécurité inférieur au premier niveau de sécurité, installés par au moins un utilisateur, lesdits services applicatifs tiers étant des applications dont la fourniture est contrôlée par au moins un fournisseur d'applications, ledit au moins un fournisseur étant indépendant de l'opérateur,
- un deuxième groupe (G2) de machines virtuelles dédié à l'exécution de services contrôlés par l'opérateur, de niveau de sécurité inférieur au premier niveau de sécurité, et
- un troisième groupe (G3) de machines virtuelles apte à mettre en oeuvre des services de sécurité de premier niveau de sécurité, comprenant la fourniture d'un service de décryptage à un service de contrôle d'accès aux contenus multimédia, l'utilisateur du dispositif étant autorisé à obtenir des contenus multimédia déchiffrés obtenus à partir de contenus multimédia chiffrés fournis par l'opérateur sous le contrôle d'une machine virtuelle du troisième groupe apte à fournir ledit service de décryptage,
le troisième groupe (G3) de machines virtuelles étant en outre apte à assurer un rôle de tiers de confiance, garantissant un partage de ressources matérielles disponibles, pour l'exécution des services desdits premier et deuxième groupe de machines virtuelles.

2. Dispositif de traitement de contenus multimédia selon la revendication 1, **caractérisé en ce que** ledit troisième groupe comporte au moins une machine virtuelle exécutant un service de déchiffrement multimédia.

3. Dispositif de traitement de contenus multimédia selon l'une des revendications 1 à 2, **caractérisé en ce qu'**il comporte en outre des moyens de stockage de données relatives aux services mis en oeuvre.

4. Dispositif de traitement de contenus multimédia selon l'une des revendications 1 à 3, **caractérisé en ce qu'**il comporte des moyens (18) d'accès à un réseau de communications, et **en ce que** lesdits services applicatifs tiers sont téléchargés par l'utilisateur via ledit réseau de communications.

5. Dispositif de traitement de contenus multimédia selon l'une des revendications précédentes, **caractérisé en ce que** ledit troisième groupe (G3) comporte une machine virtuelle exécutant un service tiers de confiance (41), apte à communiquer avec un service mis en oeuvre par une machine virtuelle du premier groupe ou avec un service mis en oeuvre par une machine virtuelle du deuxième groupe via des canaux sécurisés (42, 44).

6. Dispositif de traitement de contenus multimédia selon l'une des revendications précédentes, **caractérisé en ce que** les machines virtuelles dudit troisième groupe ont des privilèges d'exécution attribués par ledit hyperviseur supérieurs aux privilèges d'exécution attribués respectivement aux machines virtuelles desdits premier groupe et deuxième groupe.

7. Dispositif de traitement de contenus multimédia selon l'une des revendications précédentes, **caractérisé en ce que** chaque machine virtuelle dudit premier groupe (G1) exécute un service applicatif tiers ou un agrégat de services applicatifs tiers.

8. Dispositif de traitement de contenus multimédia selon l'une des revendications précédentes, **caractérisé en ce qu'**il comporte un nombre prédéterminé de processeurs physiques et **en ce que** ledit hyperviseur est apte à contrôler lesdits processeurs physiques.

## Patentansprüche

1. Anlage zur Bearbeitung von Multimediainhalten, dazu geeignet, verschlüsselte Multimediainhalte zu empfangen, die von mindestens einem, von einem Betreiber verwalteten Sender kommen, die durch ein System zum Schutz von Inhalten geschützt sind, und dazu, die besagten Multimediainhalte in entschlüsselter Form an ein Benutzergerät zu bereitzustellen, umfassend Mittel (10) zur Durchführung einer Zugangskontrolle mit Autorisierung der Bereitstellung der besagten entschlüsselten Multimediainhalte an das besagte Benutzergerät, wobei Mittel (10, 12, 14) zur Erbringung von Sicherheitsdiensten ein erstes verbundenes Sicherheitsniveau haben, und Mittel (22) zur Erbringung von Diensten ein verbundenes Sicherheitsniveau haben, das unterhalb des besagten ersten Sicherheitsniveaus liegt, **dadurch gekennzeichnet, dass** sie umfasst:
- einen Hypervisor (30), der dazu geeignet ist, die Ausführung von mindestens drei Gruppen von virtuellen Maschinen (G1, G2, G3) zu kontrollieren, wobei die besagten Gruppen von virtuellen Maschinen in streng getrennter Weise ausgeführt werden, darunter:
- eine erste Gruppe (G1) von virtuellen Maschinen, die für die Erbringung von Anwendungsdiensten Dritter bestimmt ist, mit einem Sicherheitsniveau, das unterhalb des ersten Sicherheitsniveaus liegt, die durch mindestens einen Benutzer installiert werden, wobei die besagten Anwendungsdienste Dritter Anwendungen sind, deren Bereitstellung durch mindestens einen Anwendungsprovider kontrolliert wird, wobei der besagte mindestens eine Provider unabhängig vom Betreiber ist,
- eine zweite Gruppe (G2) von virtuellen Maschinen, die für die Erbringung von durch den Betreiber kontrollierten Diensten bestimmt ist, mit einem Sicherheitsniveau, das unterhalb des ersten Sicherheitsniveaus liegt, und
- eine dritte Gruppe (G3) von virtuellen Maschinen, die dazu geeignet ist, Sicherheitsdienste des ersten Sicherheitsniveaus zu erbringen, umfassend die Bereitstellung eines Dienstes zur Entschlüsselung an einen Dienst zur Zugangskontrolle zu Multimediainhalten, wobei der Benutzer der Anlage autorisiert ist, entschlüsselte Multimediainhalten zu erhalten, die aus verschlüsselten Multimediainhalten erhalten werden, welche durch den Betreiber unter der Kontrolle einer virtuellen Maschine der dritten Gruppe, die geeignet ist, den besagten Entschlüsselungsdienst zu erbringen, bereitgestellt werden,
wobei die dritte Gruppe (G3) von virtuellen Maschinen des Weiteren geeignet ist, eine Rolle eines vertrauenswürdigen Dritten sicherzustellen, indem sie eine Teilung von verfügbaren Hardwareressourcen garantiert, für die Erbringung der Dienste der besagten ersten und zweiten Gruppe von virtuellen Maschinen.

2. Anlage zur Bearbeitung von Multimediainhalten nach Anspruch 1, **dadurch gekennzeichnet, dass** die besagte dritte Gruppe mindestens eine virtuelle Maschine umfasst, die einen Dienst zur Multimediaentschlüsselung erbringt.

3. Anlage zur Bearbeitung von Multimediainhalten nach einem der Ansprüche 1 bis 2, **dadurch gekennzeichnet, dass** sie des Weiteren Mittel zur Speicherung von Daten in Bezug auf die erbrachten Dienste umfasst.

4. Anlage zur Bearbeitung von Multimediainhalten nach einem der Ansprüche 1 bis 3, **dadurch gekennzeichnet, dass** sie Mittel (18) zum Zugang zu einem Kommunikationsnetzwerk umfasst, und dadurch, dass die besagten Anwendungsdienste Dritter durch den Benutzer über das besagte Kommunikationsnetzwerk heruntergeladen werden.

5. Anlage zur Bearbeitung von Multimediainhalten nach einem der vorstehenden Ansprüche, **dadurch gekennzeichnet, dass** die besagte dritte Gruppe (G3) eine virtuelle Maschine umfasst, die einen vertrauenswürdigen Drittdienst (41) erbringt, dazu geeignet, mit einem durch eine virtuelle Maschine der ersten Gruppe erbrachten Dienst oder mit einem durch eine virtuelle Maschine der zweiten Gruppe erbrachten Dienst über gesicherte Kanäle (42, 44) zu kommunizieren.

6. Anlage zur Bearbeitung von Multimediainhalten nach einem der vorstehenden Ansprüche, **dadurch gekennzeichnet, dass** die virtuellen Maschinen der besagten dritten Gruppe durch den besagten Hypervisor zugeteilte Ausführungsprivilegien haben, die höher als die Ausführungsprivilegien sind, die jeweils den virtuellen Maschinen der besagten ersten Gruppe und zweiten Gruppe zugeteilt sind.

7. Anlage zur Bearbeitung von Multimediainhalten nach einem der vorstehenden Ansprüche, **dadurch gekennzeichnet, dass** jede virtuelle Maschine der besagten ersten Gruppe (G1) einen Anwendungsdienst Dritter oder ein Aggregat von Anwendungsdiensten Dritter erbringt.

8. Anlage zur Bearbeitung von Multimediainhalten nach einem der vorstehenden Ansprüche, **dadurch gekennzeichnet, dass** sie eine vorgegebene Anzahl von physikalischen Prozessoren umfasst, und dadurch, dass der besagte Hypervisor geeignet ist, um die besagten physikalischen Prozessoren zu kontrollieren.

## Claims

1. A multimedia content processing device, able to receive encrypted multimedia content from at least one transmitter managed by an operator, protected by a content protection system, and to provide the multimedia content in decrypted form to a user device, comprising means (10) for implementing access control authorizing the provision of said decrypted multimedia content to said user device, means (10, 12, 14) for executing security services having a first associated level of security and means (22) for executing services having an associated level of security lower than said first level of security, **characterized in that** it comprises:
- a hypervisor (30) able to control the execution of at least three groups of virtual machines (G1, G2, G3), said groups of virtual machines being executed in a strictly separate manner, including:
- a first group (G1) of virtual machines dedicated to executing third-party application services with a level of security lower than the first level of security, installed by at least one user, said third-party application services being applications whose provision is controlled by at least one application provider, said at least one provider being independent from the operator,
- a second group (G2) of virtual machines dedicated to the execution of services controlled by at least one operator, with a level of security lower than the first level of security, and
- a third group (G3) of virtual machines able to implement security services of first level of security, comprising providing a decoding service to an access control service for the multimedia content, the user of the device being authorized to obtain decrypted multimedia content obtained from encrypted multimedia content provided by the operator under the control of a virtual machine from the third group able to provide said decoding service,
the third group (G3) of virtual machines being also able to act as trusted third parties, guaranteeing sharing of available hardware resources for the execution of services of said first and second groups of virtual machines.

2. The multimedia content processing device according to claim 1, **characterized in that** said third group comprises at least one virtual machine executing a multimedia decryption service.

3. The multimedia content processing device according to one of claims 1 to 2, **characterized in that** it further comprises data storage means relative to the implemented services.

4. The multimedia content processing device according to one of claims 1 to 3, **characterized in that** it comprises means (18) for accessing a communication network, and **in that** said third-party application services are downloaded by the user via said communication network.

5. The multimedia content processing device according to one of the preceding claims, **characterized in that** said third group (G3) comprises a virtual machine performing a trusted third party service (41), able to communicate with a service implemented by a virtual machine of the first group or with a service implemented by a virtual machine of the second group through secure channels (42, 44).

6. The multimedia content processing device according to one of the preceding claims, **characterized in that** the virtual machines of said third group have execution privileges assigned by said hypervisor greater than the execution privileges respectively assigned to the virtual machines from said first group and second group.

7. The multimedia content processing device according to one of the preceding claims, **characterized in that** each virtual machine of said first group (G1) executes a third-party application service or a third-party application service aggregate.

8. The multimedia content processing device according to one of the preceding claims, **characterized in that** it comprises a predetermined number of physical processors, and said hypervisor is able to control said physical processors.
